# NEUE EUROPÄISCHE PATENTSCHRIFT

(11) **EP 0 901 003 B2**
(45) Veröffentlichungstag und Bekanntmachung des Hinweises auf die Entscheidung über den Einspruch: **23.09.2009**
(45) Hinweis auf die Patenterteilung: 12.02.2003
(21) Anmeldenummer: 98121970.2
(22) Anmeldetag: 11.11.1992
(51) Int. Cl.: G01F 11/02

(54) **Flaschendispenser**
Bottle dispenser
Dispensateur de bouteilles

(30) Priorität: 13.11.1991 DE 4137351
(43) Veröffentlichungstag der Anmeldung: 10.03.1999
(62) Teilanmeldung aus: 92119309.0
(73) Patentinhaber: VITLAB GmbH, 64342 Seeheim-Jugenheim (DE)
(72) Erfinder: Lutz, Walter, 6980 Wertheim-Grünenwört (DE)
(74) Vertreter: Gesthuysen, von Rohr & Eggert

(56) Entgegenhaltungen:
- EP-A- 0 269 496
- DE-A- 2 343 687

## Beschreibung

Die Erfindung betrifft einen Flaschendispenser nach dem Oberbegriff des Anspruchs 1.

Ein derartiger Flaschendispenser ist aus der DE-PS 23 43 687 bekannt. Er besteht aus einem Zylinder, vorzugsweise einem Glaszylinder, mit einem Gegenanschlag und aus einer Kolbeneinheit mit einem in dem Zylinder längsverschieblich geführten Kolben und einer den Zylinder übergreifenden Zylinderhülse, die einen Längsschlitz aufweist, in dem ein mit einem Anschlag versehener Anschlagkörper verschieblich und arretierbar geführt ist. Die Zylinderhülse weist im Bereich des Längsschlitzes eine Zahnleiste auf. Der Anschlagkörper weist mindestens einen Zahn auf, der mit der Zahnleiste in Eingriff und außer Eingriff bringbar ist. Wenn der Zahn außer Eingriff gebracht wird, kann der Anschlagkörper im Längsschlitz verschoben werden. Anschließend wird der Anschlagkörper an einer anderen Stelle des Längsschlitzes wieder arretiert, und zwar dadurch, daß der Zahn in die Zahnleiste eingreift. Der an dem Anschlagkörper vorgesehen Anschlag wirkt mit dem an dem Zylinder vorgesehenen Gegenanschlag zur Hubbegrenzung des Kolbens und damit zur Dosierung zusammen.

Ein Flaschendispenser der eingangs angegebenen Art ist ferner aus der DE-PS 38 14 076 bekannt.

Bei den vorbekannten Flaschendispensem ist die Betriebssicherheit verbesserungsbedürftig, insbesondere dann, wenn mit gefährlichen, beispielsweise ätzenden oder giftigen, Flüssigkeiten gearbeitet wird.

Aufgabe der Erfindung ist es, bei einem Flaschendispenser der eingangs angegebenen Art die Betriebssicherheit zu verbessern.

Erfindungsgemäß wird diese Aufgabe durch die kennzeichnenden Merkmale des Anspruchs 1 gelöst. In dem Gehäuse ist ein Tragring drehbar gelagert, in dem die Druckleitung verläuft. Hierdurch ist es möglich, die Druckleitung um die Längsachse des Gehäuses zu verschwenken, wodurch die Betriebssicherheit verbessert wird.

Vorteilhafte Weiterbildungen sind in den Unteransprüchen beschrieben.

Vorteilhaft ist es, wenn der Flaschendispenser eine von der Druckleitung abzweigende Rücklaufleitung besitzt, durch die angesaugte Flüssigkeit in den Behälter zurück abgegeben werden kann. Die Abzweigung der Rücklaufleitung befindet sich vorzugsweise stromabwärts vom Druckventil.

Hierdurch kann vermieden werden, daß die zu dosierende Flüssigkeit in einem an sich nicht erforderlichen Ausmaß abgegeben wird, wodurch wiederum die damit verbundenen Gefahren vermieden werden. Wenn der Flaschendispenser erstmals mit einem Behälter, beispielsweise einer vollen Flasche, verbunden wird, befindet sich im allgemeinen noch Luft in den Leitungen und Kanälen und in dem Zylinder des Flaschendispensers. Um eine genaue Dosierung zu ermöglichen, muß diese Luft vollständig entfernt werden. Dies geschieht dadurch, daß einige Kolbenhübe durchgeführt werden und daß die dabei aus dem Dispenser austretende Flüssigkeit in einem gesonderten Gefäß aufgefangen wird. Die Kolbenhübe werden so lange ausgeführt, bis keine Luft mehr gefördert wird. Erst danach ist der Dispenser betriebsbereit. Dadurch, daß die Flüssigkeit zunächst in einem gesonderten Gefäß aufgefangen werden muß, entsteht ein zusätzlicher Aufwand. Ferner bringt dies bei gefährlichen Flüssigkeiten zusätzliche Gefahren mit sich.

Durch die Rücklaufleitung wird dies vermieden. Während des nach wie vor erforderlichen Abpumpens von Flüssigkeit aus einem erstmalig verwendeten Flüssigkeitsbehälter wird die Rücklaufleitung aktiviert, so daß die angesaugte Flüssigkeit in den Behälter zurück abgegeben wird. Erst dann, wenn keine Luft mehr gefördert wird, wird die Rücklaufleitung deaktiviert, so daß aus dem dann betriebsbereiten Dispenser Flüssigkeit dosiert werden kann. Neben der Verminderung von Gefahren und Aufwand wird hierdurch auch ein sparsamerer Betrieb erreicht.

Die Rücklaufleitung kann mit der Druckleitung lösbar verbindbar sein. Zunächst wird die Rücklaufleitung mit der Druckleitung verbunden, bis der Flaschendispenser in der oben beschriebenen Weise betriebsbereit ist. Danach wird die Rücklaufleitung von der Druckleitung gelöst.

Nach einer weiteren vorteilhaften Weiterbildung ist die Rücklaufleitung durch ein Ventil aufsteuerbar und verschließbar. Zunächst wird die Rücklaufleitung aufgesteuert, bis der Flaschendispenser in der oben beschriebenen Weise betriebsbereit ist. Danach wird die Rücklaufleitung verschlossen.

Vorzugsweise ist das Ventil in eine erste Stellung bringbar, in der die Druckleitung geöffnet und die Rücklaufleitung geschlossen ist, und in eine zweite Stellung, in der die Druckleitung geschlossen und die Rücklaufleitung geöffnet ist. In der ersten Stellung wird die Druckleitung durchströmt; Flüssigkeit kann dosiert und abgegeben werden. In der zweiten Stellung ist die Druckleitung abgesperrt und wird die aufgesteuerte Rücklaufleitung durchströmt.

Das Ventil kann aus einem drehbaren Ventilkörper mit einem die Druckleitung öffnenden Druckkanal und einem die Rücklaufleitung öffnenden Rücklaufkanal bestehen.

Eine weitere vorteilhafte Weiterbildung ist dadurch gekennzeichnet, daß das Ventil einen längsverschieblichen, vorzugsweise federbelasteten Ventilkörper aufweist.

Vorzugsweise ist in der Druckleitung ein Ventil vorgesehen, das in eine erste Stellung bringbar ist, in der die Druckleitung geöffnet ist, und das in eine zweite Stellung bringbar ist, in der die Druckleitung geschlossen ist. Dadurch, daß die Druckleitung geschlossen werden kann, wird die Betriebssicherheit verbessert.

Eine vorteilhafte Weiterbildung ist dadurch gekennzeichnet, daß das Ventil in seiner zweiten, die Druckleitung schließenden Stellung den Kolben verriegelt. In dieser verriegelnden Stellung kann der Kolben demnach nicht bewegt werden. Es ist nicht möglich, Flüssigkeit anzusaugen oder abzugeben. Hierdurch werden Fehlfunktionen, die Gefahren mit sich bringen, ausgeschlossen. Wenn die Druckleitung geschlossen ist, wird bereits ein Ansaugen der Flüssigkeit verhindert.

Das Ventil kann aus einem drehbaren Ventilkörper bestehen.

Nach einer weitere vorteilhaften Weiterbildung weist das Ventil einen Betätigungsknopf bzw. Drehknopf auf, an dem ein Ansatz vorgesehen ist, der in der zweiten, die Druckleitung schließenden Stellung des Ventils einen mit dem Kolben verbundenen Absatz übergreift. Hierdurch wird eine Bewegung des Kolbens verhindert.

Vorzugsweise ist mit dem Kolben ein den Zylinder übergreifendes Teil, vorzugsweise eine Zylinderhülse, verbunden, an dem bzw. der der Absatz angeordnet ist. Der Absatz kann als ein am unteren Ende der Zylinderhülse vorgesehener Absatzring ausgebildet sein. Bei dieser Ausgestaltung kommt es auf die Drehstellung des Kolbens bzw. der mit diesem verbundenen Zylinderhülse nicht an.

Nach einer weiteren vorteilhaften Weiterbildung ist der drehbare Ventilkörper mit einer Außenverzahnung versehen, die in eine an einem Betätigungsring vorgesehene Verzahnung eingreift. Der Betätigungsring kann an dem Gehäuse oder an einem mit dem Gehäuse verbundenen Tragring drehbar gelagert sein.

Das Ventil kann einen längsverschieblichen, vorzugsweise federbelasteten Ventilkörper aufweisen.

Eine weitere vorteilhafte Weiterbildung ist dadurch gekennzeichnet, daß das Ventil in einem Ventilgehäuse vorgesehen ist, das mit dem Gehäuse lösbar verbindbar, insbesondere auf das Gehäuse aufsteckbar und von dem Gehäuse abziehbar, ist. Hierdurch wird verhindert, daß das Ventilgehäuse versehentlich vom Gehäuse gelöst wird, was mit dem unkontrollierten Austreten der Flüssigkeit verbunden wäre. Vorzugsweise ist das Ventilgehäuse durch eine Widerhaken-Schnappverbindung mit dem Gehäuse lösbar verbindbar.

Vorzugsweise ist eine die Ausströmleitung umgebende Schutzkappe vorgesehen, die in eine erste Stellung bringbar ist, in der sie. die Ausströmöffnung freigibt, und die in eine zweite Stellung bringbar ist, in der sie die Ausströmöffnung überdeckt. Je nach Bedarf ist also die Ausströmöffnung zur Abgabe von Flüssigkeit freigegeben oder aus Sicherheitsgründen abgedeckt.

In der Druckleitung kann ein Ventil zum Öffnen und Schließen der Druckleitung vorgesehen sein. Vorzugsweise ist die Schutzkappe bei geöffnetem Ventil in ihrer ersten, die Ausströmöffnung freigebenden Stellung und bei geschlossenem Ventil in ihrer zweiten, die Ausströmöffnung überdeckenden Stellung. Hierdurch wird automatisch gewährleistet, daß die Schutzkappe nicht stört, wenn bei geöffnetem Ventil Flüssigkeit abgegeben wird, und daß die Schutzkappe die Ausströmöffnung schützend abdeckt, wenn bei geschlossenem Ventil keine Flüssigkeit abgegeben wird. Hierdurch wird eine Verringerung der Verletzungsgefahr erreicht; die Ausströmöffnung kann nicht, auch nicht versehentlich, berührt werden.

Die Schutzkappe kann um eine Achse drehbar sein. Die Schutzkappen-Drehachse verläuft vorzugsweise quer zur Zylinder-Längsachse.

Eine weitere vorteilhafte Weiterbildung ist gekennzeichnet durch einen Drehknopf, durch den die Schutzkappe in ihre beiden Stellungen bringbar bzw. drehbar ist. Der Drehknopf kann eine Schraubenfläche aufweisen, in die eine an der Schutzkappe vorgesehene Nase zur Drehung der Schutzkappe eingreift. Besonders vorteilhaft ist es, wenn der Drehknopf mit dem Ventil zum Öffnen und Schließen der Druckleitung verbunden ist.

Ausführungsbeispiele der Erfindung werden nachstehend anhand der beigefügten Zeichnung im einzelnen erläutert. In der Zeichnung zeigt
- Fig. 1: einen Flaschendispenser in einer Ansicht von vorne; diese Ausführungsform ist nicht Teil der Erfindung,
- Fig. 2: den in Fig. 1 dargestellten Flaschendispenser in einer Ansicht von oben; diese Ausführungsform ist auch nicht Teil der Erfindung,
- Fig. 3: den in Fig. 1 dargestellten Anschlagkörper des Flaschendispensers in einer vergrößerten Ansicht von vorne; diese Ausführungsform ist auch nicht Teil der Erfindung,
- Fig. 4: den in Fig. 3 dargestellten Flaschendispenser in einer Ansicht von oben; diese Ausführungsform ist auch nicht Teil der Erfindung,
- Fig. 5: den in Fig. 1 dargestellten Flaschendispenser in einer Schnittansicht; diese Ausführungsform ist auch nicht Teil der Erfindung,
- Fig. 6: den in den Figuren 1 bis 5 dargestellten Flaschendispenser in einer der Fig. 2 entsprechenden Schnittansicht; diese Ausführungsform ist auch nicht Teil der Erfindung,
- Fig. 7: den Flaschendispenser in einer der Fig. 1 entsprechenden Seitenansicht, wobei sich der Drehknopf in einer anderen Stellung befindet; diese Ausführungsform ist auch nicht Teil der Erfindung,
- Fig. 8: den in Fig. 7 gezeigten Flaschendispenser in einer Ansicht von oben; diese Ausführungsform ist auch nicht Teil der Erfindung
- Fig. 9: den Flaschendispenser in einer weiteren, der Fig. 7 entsprechenden Seitenansicht; diese Ausführungsform ist auch nicht Teil der Erfindung
- Fig. 10: den Flaschendispenser der Fig. 9 in einer Schnittansicht von oben längs der Linie X-X in Fig. 9; diese Ausführungsform ist auch nicht Teil der Erfindung
- Fig. 11: den Flaschendispenser in einer Seitenansicht mit einer nochmals abgeänderten Position des Drehknopfs und mit abgesenkter Schutzkappe; diese Ausführungsform ist auch nicht Teil der Erfindung
- Fig. 12: den in Fig. 11 dargestellten Flaschendispenser in einer Ansicht von oben; diese Ausführungsform ist auch nicht Teil der Erfindung
- Fig. 13: eine erfinderische Ausführungsform eines Flaschendispensers in einer der Fig. 5 entsprechenden Schnittansicht,
- Fig. 14: den in Fig. 13 dargestellten Flaschendispenser in einer der Fig. 6 entsprechenden Schnittansicht,
- Fig. 15: eine zweite erfinderische Ausführungsform eines Flaschendispensers in einer den Fig. 5 und 13 entsprechenden Schnittansicht,
- Fig. 16: den in Fig. 15 dargestellten Flaschendispenser in einer den Fig. 6 und 14 entsprechenden Schnittansicht,
- Fig. 17: eine Abwandlung des Ventils in einer Schnittansicht, wobei sich das Ventil in der die Druckleitung öffnenden Stellung befindet, diese Ausführungsform ist auch nicht Teil der Erfindung
- Fig. 18: das in Fig. 17 dargestellte Ventil in der die Rücklaufleitung öffnenden Stellung; diese Ausführungsform ist auch nicht Teil der Erfindung
- Fig. 19: eine weitere Ausführungsform eines Ventils in einer Schnittansicht in der die Rücklaufleitung öffnenden Stellung; diese Ausführungsform ist auch nicht Teil der Erfindung
- Fig. 20: eine weitere Ausführungsform eines Ventils in einer Schnittansicht in der die Druckleitung öffnenden Stellung diese Ausführungsform ist auch nicht Teil der Erfindung und
- Fig. 21: eine weitere Ausführungsform eines Ventils in einer Schnittansicht in der die Rücklaufleitung öffnenden Stellung diese Ausführungsform ist auch nicht Teil der Erfindung.

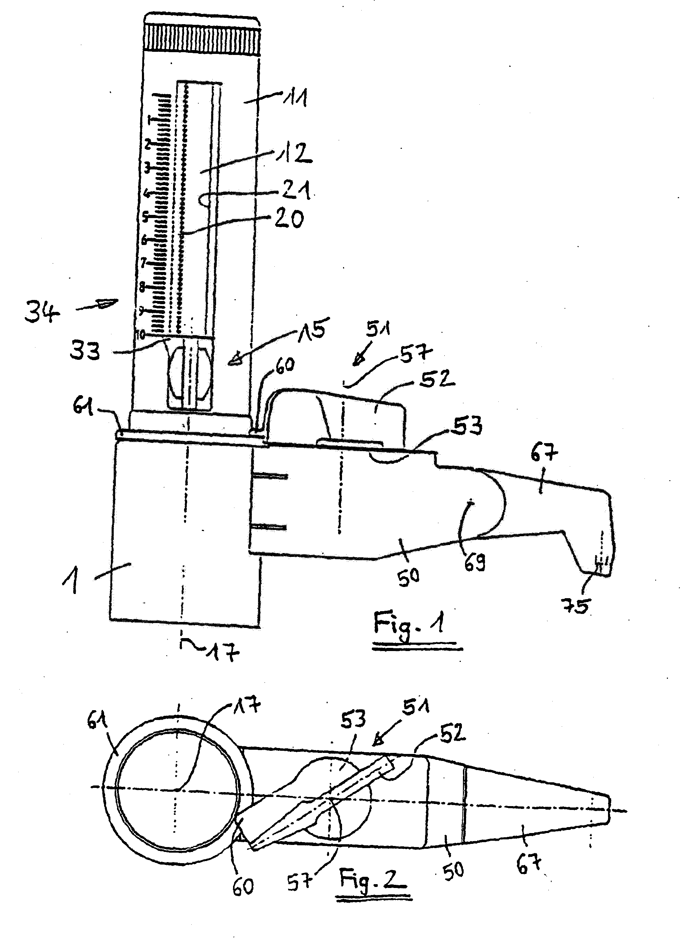

Der in den Figuren 1 und 2 dargestellte Flaschendispenser zum Ansaugen und Abgeben von Flüssigkeit besitzt ein Gehäuse 1, das mit der Öffnung einer Flasche verbunden, beispielsweise verschraubt, werden kann.

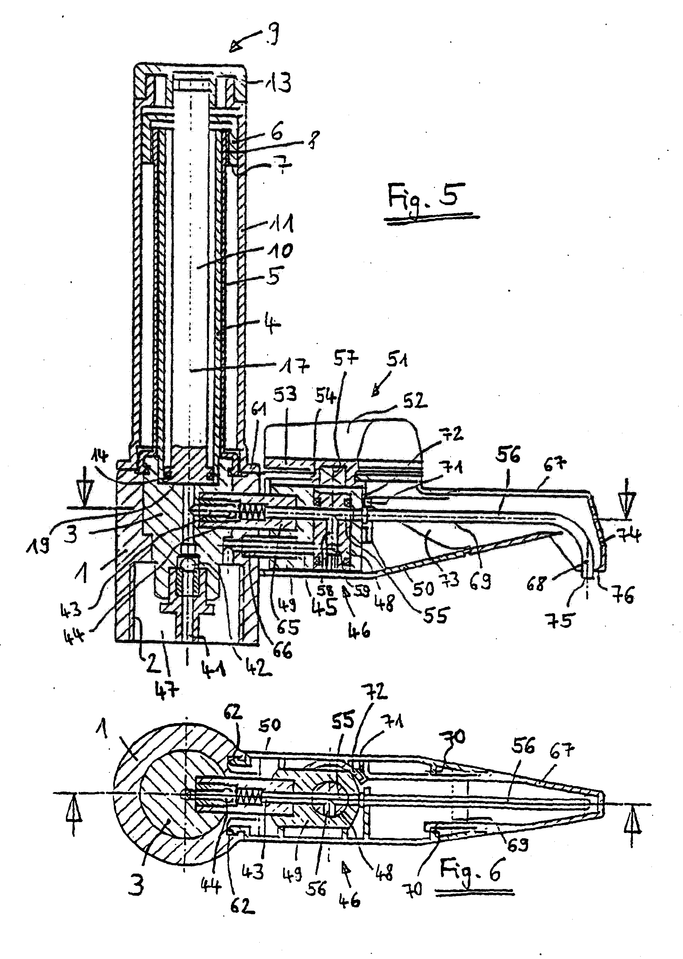

Wie insbesondere aus den Figuren 5 und 6 ersichtlich, besitzt das Gehäuse 1 an seiner Unterseite ein Innengewinde 2 zum Verschrauben mit der Öffnung einer Flasche. In dem Gehäuse 1 befindet sich ein Einsatz 3, an dessen Oberseite eine zylinderförmige Vertiefung vorgesehen ist, in der ein Zylinder 4 befestigt ist. Der Zylinder wird von einem Schutzmantel 5 aus Kunststoff umgeben, dessen unteres Ende zwischen dem Gehäuse 1 und dem Einsatz 3 eingeklemmt und damit befestigt ist. An seinem oberen Ende ist der Schutzmantel 5 mit einem Gegenanschlag 6 verbunden, der als Anschlagring ausgebildet ist und dessen untere Endfläche 7 als Gegenanschlag wirkt. Der Gegenanschlag 6 ist durch ein Gewinde 8 mit dem oberen Ende des Schutzmantels 5 verbunden. Hierdurch kann die Höhe des Gegenanschlags 6 verändert werden; die Höhe dieses Gegenanschlags 6 ist also veränderbar bzw. einjustierbar.

Der Dispenser besitzt ferner eine Kolbeneinheit 9, die aus einem in dem Zylinder 4 längsverschieblich geführten Kolben 10 und einer den Zylinder 4 und dessen Schutzmantel 5 übergreifenden Zylinderhülse 11 besteht. Der Kolben 10 ist über eine Kappe 13 mit der Zylinderhülse 11 verbunden. Der Kolben 10 liegt lediglich an seinem unteren Ende am Innenmantel des Zylinders 4 an; dort ist eine entsprechende Ringdichtung 14 angeordnet. Im übrigen Bereich ist der Außendurchmesser des Kolbens 10 geringer als der Innendurchmesser des Zylinders 4.

Die Zylinderhülse 11 weist einen Längsschlitz 12 (Fig. 1) auf, in dem ein Anschlagkörper 15 längsverschieblich und arretierbar geführt ist. Der Anschlagkörper 15 ist mit einem Anschlag 16 versehen, der als zur Zylinder-Längsachse 17 koaxialer Anschlagring ausgebildet ist. Der Anschlag 16 könnte allerdings auch als ebenfalls zur Zylinder-Längsachse 17 koaxiales Ringsegment ausgebildet sein. Die obere ebene Endfläche 18 des Anschlags 16 liegt in der oberen Endstellung der Kolbeneinheit 9 an der unteren Endfläche 7 des Gegenanschlags 6 an. Hierdurch wird der Hub des Kolbens 10 nach oben begrenzt und eine Dosierung ermöglicht. Der Hub des Kolbens 10 nach unten wird dadurch begrenzt, daß die untere Endfläche 19 des Kolbens 10 an der Bodenfläche der in dem Einsatz 3 des Gehäuses 1 vorgesehenen Vertiefung anliegt.

Die Zylinderhülse 11 weist im Bereich des Längsschlitzes 12 eine Zahnleiste 20 auf, die in den Längsschlitz 12 hinein weisend angeordnet ist. Die Zahnleiste 20 ist also an einer Seite des Längsschlitzes 12 angeordnet, die der gegenüberliegenden Seite des Längsschlitzes 12 zugewandt ist. Hierdurch befindet sich die Zahnleiste 20 im "Inneren" des Längsschlitzes 12. Die Zähne der Zahnleiste 20 liegen der gegenüberliegenden Seite des Längsschlitzes 12 gegenüber; sie weisen dort hin. An der der Zahnleiste 20 gegenüberliegenden Seite des Längsschlitzes ist eine Führungsfläche 21 vorgesehen, die im Abstand und parallel zu der Zahnleiste 20 verläuft.

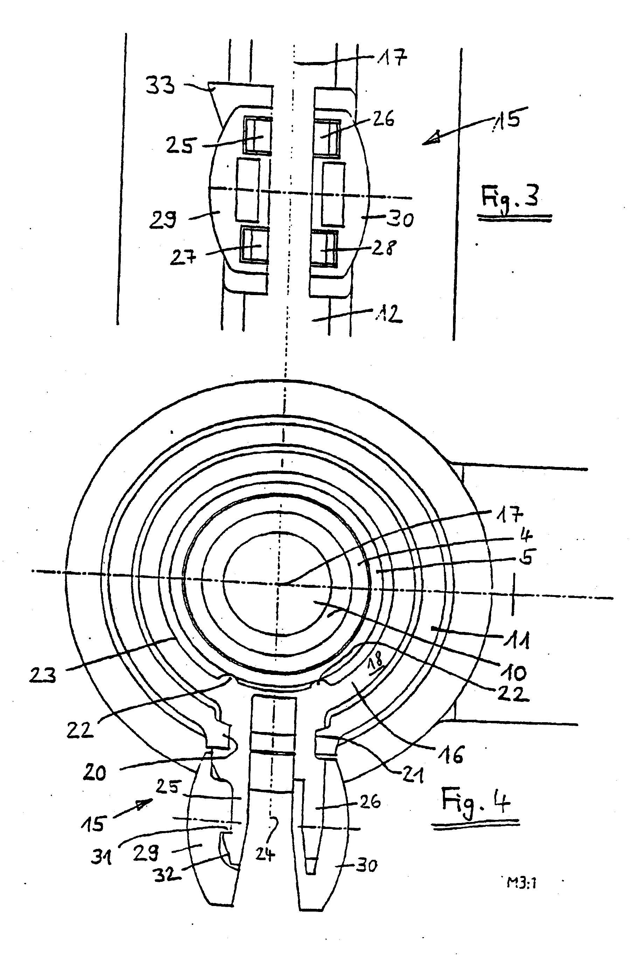

Der Anschlagkörper 15 weist einen Zahn auf, der mit der Zahnleiste 20 in Eingriff und außer Eingriff bringbar ist. Dieser Zahn ist in der Fig. 4 durch den unmittelbar darüber liegenden Zahn der Zahnleiste 20 verdeckt.

Der Anschlag weist zwei Abstützrippen 22 auf, die von der Innenfläche 23 des Anschlags 16 nach innen ragen und im Querschnitt etwa halbkreisförmig ausgebildet sind. Die Abstützrippen 22 liegen an dem den Zylinder 4 umgebenden Schutzmantel 5 an. Hierdurch kann sich der Anschlag 16 besonders gut an dem Schutzmantel 5 und damit an dem Zylinder 4 abstützen. Die Abstützrippen 22 sind parallel zueinander und im Abstand voneinander angeordnet, und zwar symmetrisch zum Längsschlitz 12 bzw. dessen Mittenachse 24.

Der Anschlagkörper 15 besitzt ferner insgesamt 4 von der Zylinder-Längsachse 17 weg weisende Arme 25, 26, 27, 28. Jeweils zwei Arme 25, 26 und 27, 28 liegen einander auf derselben Höhe gegenüber. Ferner sind jeweils zwei Arme 25, 27 und 26, 28 übereinander angeordnet. Alle Arme 25, 26, 27, 28 bilden demnach - von vorne (Fig. 3) betrachtet - ein Rechteck. Die beiden oberen Arme 25 und 26 sind im Abstand voneinander und im wesentlichen parallel zueinander angeordnet; dasselbe gilt entsprechend für die beiden unteren Arme 27, 28. Die Arme 25, 26, 27, 28 ragen durch den Längsschlitz 12 hindurch nach außen. An dem Arm 25 ist der in die Zahnleiste 20 eingreifende Zahn angeordnet, und zwar an der Außenseite dieses Armes 25. An dem darunter liegenden Arm 27 kann ebenfalls ein Zahn angeordnet sein.

Auf jeweils zwei übereinander liegende Arme 25, 27, und 26, 28 ist jeweils ein Griffstück 29, 30 aufgesteckt. Die Außenseiten der Griffstücke sind abgerundet. Das Griffstück 29 ist mit dem Arm 25 und eventuell auch mit dem Arm 27 verrastend verbunden, und zwar durch einen Absatz 31 am Ende einer Schrägfläche 32. Am oberen Ende des Anschlagkörpers 15 ist ein Zeiger 33 vorgesehen, durch den das eingestellte Hubvolumen anhand einer Skala 34 (Fig. 1) abgelesen werden kann.

Der Anschlag 16 kann auf einfache Weise dadurch verstellt werden, daß die Griffstücke 29, 30 zusammengedrückt werden. Hierdurch werden auch die Arme 25 bis 28 zusammengedrückt, so daß der an dem Arm 25 vorgesehene Zahn mit der Zahnleiste 20 außer Eingriff gelangt. Anschließend kann der Anschlagkörper 15 nach oben oder unten in die gewünschte Stellung verschoben werden. Dort werden dann die Griffstücke 29, 30 wieder losgelassen, so daß der Zahn an dem Arm 25 erneut, und zwar in einer anderen Stellung, mit der Zahnleiste 20 verrastet. Die obere Endfläche 18 des Anschlags 16 befindet sich dann in einer anderen Höhe, die durch den Zeiger 33 an der Skala 34 angezeigt wird. In entsprechender Weise ändert sich auch der Hub des Kolbens 10.

Wie aus Fig. 5 ersichtlich, ist in dem Gehäuse 1, das aus Polypropylen bestehen kann, genauer gesagt in dem Einsatz 3, der aus Teflon bestehen kann, eine zum Zylinder 4 führende Ansaugleitung 41 vorgesehen, in der sich das Ansaugventil 42 befindet, sowie eine Druckleitung 43, in der sich das Druckventil 44 befindet. Stromabwärts, in der Fig. 5 also rechts, vom Druckventil 44 zweigt von der Druckleitung 43 eine Rücklaufleitung 45 ab, die durch ein Ventil 46 aufsteuerbar und verschließbar ist. Wenn das Ventil 46 aufgesteuert ist, durchströmt die Flüssigkeit beim Ausstoßhub des Kolbens 10 die Druckleitung 43, das Druckventil 44, die Kanäle in dem Ventil 46 und die Rücklaufleitung 45. Die Flüssigkeit gelangt von dort in den die Saugleitung 41 umgebenden Ringraum 47 innerhalb des Gehäuses 1, von wo sie in den Behälter zurück gelangt, dessen Öffnung mit dem Gewinde 2 des Gehäuses 1 verschraubt ist. Das Ventil 46 besteht aus einem drehbaren Ventilkörper 48, der in einem Ventilblock 49 drehbar gelagert ist. Der Ventilblock 49 ist mit einem Ventilgehäuse 50 verbunden. Der drehbare Ventilkörper 48 ist an seinem oberen Ende mit einem Drehknopf 51 verbunden, der aus einem Drehgriff 52 und einer Grundplatte 53 besteht. Die Grundplatte 53 besitzt einen nach unten weisenden Fortsatz mit einer Ringnut 54, mit der sie in eine entsprechende Bohrung an der Oberseite des Gehäuses 50 eingreift. Durch den unterhalb der Nut 54 befindlichen Absatz ist die Grundplatte 53 und damit der Drehknopf 51 sowie der mit ihm verbundene drehbare Ventilkörper 48 gegen Abziehen gesichert.

In der in den Figuren 5 und 6 gezeigten Stellung ist der drehbare Ventilkörper 48 in seiner die Druckleitung öffnenden Drehstellung. Der den Ventilkörper 48 geradlinig durchsetzende Druckkanal 55 verbindet die Druckleitung 43 mit der Ausströmleitung 56.

Wenn der Ventilkörper 48 aus der in Fig. 6 gezeigten Stellung um 90° im Uhrzeigersinn gedreht wird, wird die Druckleitung 43 geschlossen und wird die Rücklaufleitung 45 geöffnet. Die Verbindung zwischen der Druckleitung 43 und der Ausströmleitung 56 wird also unterbrochen, und es wird eine Verbindung zwischen der Druckleitung 43 und der Rücklaufleitung 45 hergestellt. Dies geschieht über den Kanal 56, den vertikalen, durch die Ventilkörper-Drehachse 57 verlaufenden Kanal 58 und den am unteren Ende des vertikalen Kanals 58 anschließenden, horizontalen Kanal 59, der unterhalb des Kanals 56 parallel zu diesem verläuft in die Rücklaufleitung 45 mündet. Die Kanäle 56, 58 und 59 bilden den Rücklaufkanal im Ventilkörper 48. Oberhalb und unterhalb der Kanäle besitzt der Ventilkörper jeweils eine Ringdichtung, die ihn gegenüber dem Ventilblock abdichtet.

Wenn der Ventilkörper 48 um 45° oder ein ganzzahliges Vielfaches davon gedreht wird, sind alle Leitungen geschlossen. Dann ist also sowohl die Druckleitung 43 geschlossen, da deren Verbindung mit der Ausströmleitung 56 unterbrochen ist, als auch die Rücklaufleitun 45 geschlossen, da deren Verbindung mit dem Kanal 59 geschlossen ist. In dieser Stellung des Ventilkörpers 48 und damit des Ventils 46 ist auch der Kolben 10 verriegelt. Wie in den Figuren 1 und 2 gezeigt, übergreift in dieser Stellung ein an der Grundplatte 53 des Drehknopfs 51 vorgesehener Ansatz 60 den Absatz 61, der am unteren Ende der mit dem Kolben 10 verbundenen Zylinderhülse 11 als Absatzring ausgebildet ist, und zwar unabhängig von der Drehstellung der Zylinderhülse 11. In der in den Figuren 1 und 2 gezeigten, verriegelnden Stellung des Drehknopfs 51 ist eine Bewegung der Zylinderhülse 11 und damit auch des Kolbens 10 nicht möglich.

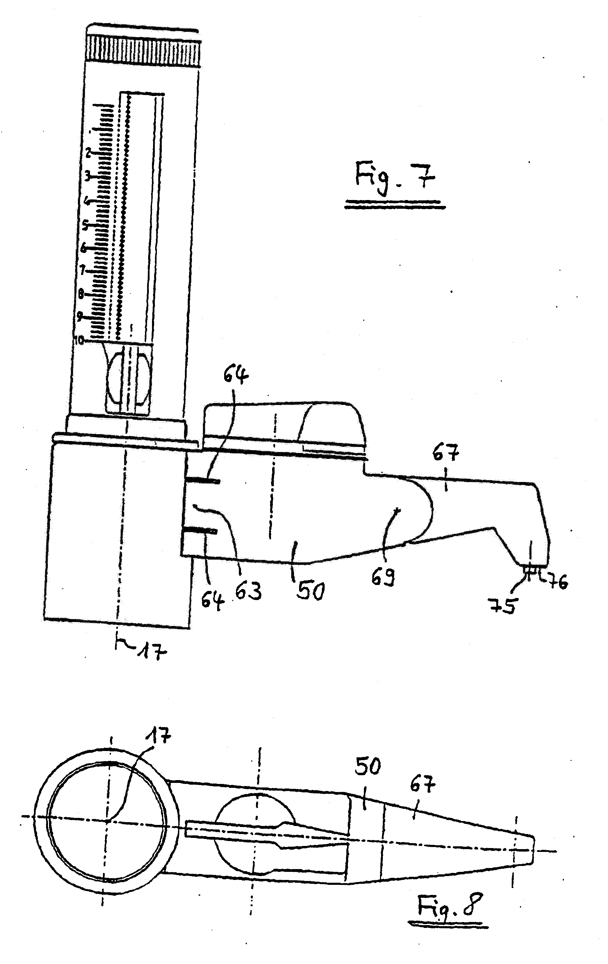

Das Ventilgehäuse 50 ist mit dem Gehäuse 1 durch eine Widerhaken-Schnappverbindung lösbar verbindbar. Diese Widerhaken-Schnappverbindung besteht aus zwei im Gehäuse 1 vorgesehenen Längsnuten 62, in die entsprechend ausgebildete Widerhaken an dem in der Fig. 6 links gezeigten Ende des Ventilgehäuses 50 eingreifen. Die Widerhaken bestehen jeweils aus einer Schrägfläche und einem daran anschließenden Ansatz, der eine entsprechende Flanke der Nut 62 hintergreift. Bei der Herstellung der Verbindung bewirken die Schrägflächen, daß die Enden des Gehäuses 50 nach innen aufeinander zu bewegt werden, bis sie nach Erreichen der in Fig. 6 gezeigten Endstellung durch die Ansätze mit den Nuten 62 verrasten. Die Widerhaken befinden sich am Ende eines blattfederartig ausgebildeten Teils 63 (Fig. 7), das oben und unten durch Schlitze 64 begrenzt und durch diese Schlitze 64 gebildet wird.

Das Druckventil 44 befindet sich in einem Ventilstutzen 65, der quer zur Zylinder-Längsachse 17 aus dem Gehäuse 1 herausragt. Unterhalb des Ventilstutzens 65 für das Druckventil 44 befindet sich der Rücklaufstutzen 66, der ebenfalls aus dem Gehäuse 1 herausragt. In dem Ventilblock 49 des Ventilgehäuses 50 sind entsprechende Bohrungen vorhanden, die den aus dem Gehäuse 1 herausragenden Ventilstutzen 65 und den ebenfalls aus dem Gehäuse 1 herausragenden Rücklaufstutzen 66 aufnehmen. Hierdurch wird bewirkt, daß das Ventilgehäuse 50 nur quer (in Fig. 5 nach rechts) vom Gehäuse 1 abgezogen werden kann. Da es in dieser Richtung durch die Widerhaken-Schnappverbindung 62 gegen Abziehen gesichert ist, ist gewährleistet, daß das Ventilgehäuse 50 nicht unbeabsichtigt vom Gehäuse 1 getrennt werden kann.

Am vorderen, in der Fig. 5 rechts gezeigten Ende des Ventilgehäuses 50 ist eine Schutzkappe 67 vorgesehen, die das rechtwinklig nach unten verlaufende Ende 68 der Ausströmleitung 56 übergreift. Die Schutzkappe 67 ist um eine quer zur Zylinder-Längsachse 17 verlaufende Achse 69 drehbar. Zu diesem Zweck sind im Inneren des Gehäuses 50 zwei zylindrische Ansätze 70 vorgesehen, die in entsprechende Bohrungen an der Außenseite der Schutzkappe 67 eingreifen. An dem dem Ventilgehäuse 50 zugewandten Ende besitzt die Schutzkappe 67 eine Nase 71, die in eine an dem Drehknopf 51 vorgesehene Schraubenfläche 72 eingreift. Durch eine Drehung des Drehknopfs 51 wird die Nase 71 in vertikaler Richtung bewegt, wodurch die Drehung der Schutzkappe 67 um ihre Drehachse 69 bewirkt wird. Die Schutzkappe ist als um die Drehachse 69 drehbarer, zweiarmiger Hebel ausgestaltet. Am Ende des in der Fig. 5 links gezeigten Hebelarms 73 befindet sich die in die Schraubenfläche 72 eingreifende Nase 71, am anderen Ende befindet sich der das Ende 68 der Ausströmleitung 65 übergreifende Teil 74 der Schutzkappe 67. Die Drehung der Schutzkappe 67 wird durch den auch die Drehung des Ventilkörpers 48 bewirkenden Drehknopf 51 hervorgerufen. Die Nase 71 wirkt als Mitnehmerzapfen.

In der in den Figuren 5, 7 und 9 gezeigten Stellung wird die Ausströmöffnung 75 am Ende der Ausströmleitung 56 von der Schutzkappe 67 freigegeben. In dieser Stellung befindet sich das untere Ende 76 der Schutzkappe 67 über der Ausströmöffnung 75. Das untere Ende der Ausströmleitung 56 ragt also über die Schutzkappe 67 hinaus.

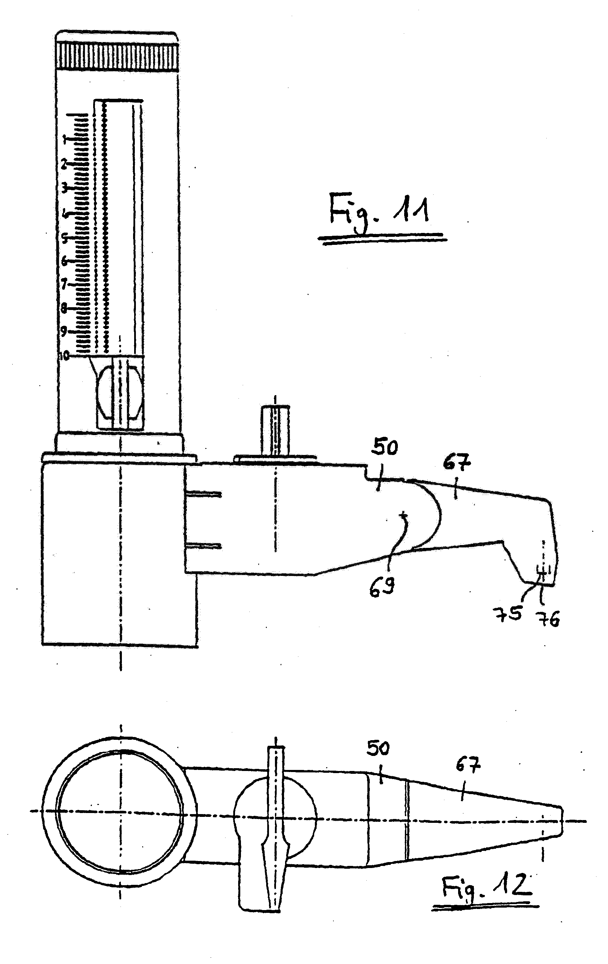

Durch eine Drehung der Schutzkappe 67 um ihre Drehachse 69 kann die in den Figuren 1 und 11 gezeigte Stellung erreicht werden. In dieser Stellung überdeckt die Schutzkappe 67 die Ausströmöffnung 75. In dieser Stellung ist ein ungewolltes Berühren der Ausströmöffnung 75 nicht möglich.

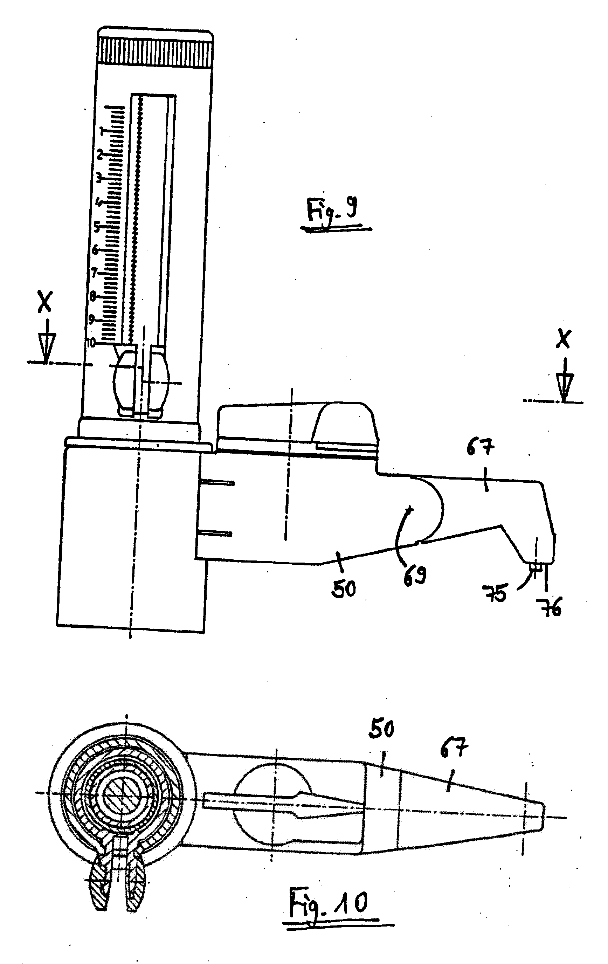

Der Drehgriff 52 des Drehknopfs 51 ist in der Draufsicht pfeilförmig gestaltet, wobei der Pfeil die Durchflußrichtung angibt. In der in den Figuren 8 und 10 gezeigten Stellung weist der Pfeil zur Ausströmöffnung 75 hin. Das Ventil 46 befindet sich in der die Druckleitung 43 öffnenden Stellung, in der eine Verbindung zwischen der Druckleitung 43 und der Ausströmleitung 56 hergestellt wird, so daß Flüssigkeit aus dem Dispenser ausströmen kann. Der Kolben ist nicht verriegelt. Die Schutzkappe 67 befindet sich in ihrer oberen, die Ausströmöffnung 75 freigebenden Stellung.

In der Stellung gemäß Fig. 12 ist die Druckleitung 43 abgesperrt. Die Rückströmleitung 45 ist geöffnet. Die Stellung gemäß Fig. 12 wird gewählt, wenn der Dispenser erstmals mit einem Behälter verbunden wird, wenn also durch mehrmaliges Pumpen die Luft aus dem Kanalsystem entfernt werden muß. In dieser Stellung deckt die Schutzkappe 67 die Ausströmöffnung 75 ab (Fig. 11).

In den Fig. 1 und 2 ist die verriegelnde Stellung des Drehknopfs 51 gezeigt. Der Kolben 10 ist arretiert. Ein Ansaugen oder Ausstoßen von Flüssigkeit ist nicht möglich. Alle Kanäle sind geschlossen. Die Schutzkappe 67 deckt die Ausströmöffnung 75 ab.

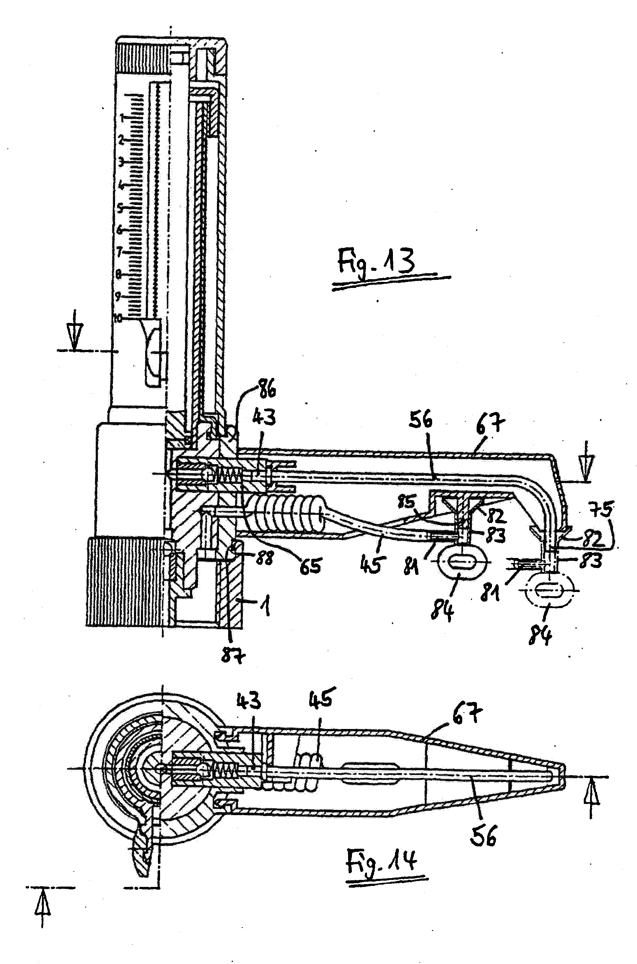

Die Fig. 13 und 14 zeigen eine erfinderische Ausführungsform eines Flaschendispensers, bei dem gleiche Teile mit gleichen Bezugszeichen versehen sind. Bei dieser Ausführungsform ist in der Druckleitung 43 kein Ventil vorgesehen. Die Rücklaufleitung 45 besteht aus einem flexiblen Schlauch, der teilweise spiralförmig aufgerollt ist, so daß er auf eine einfache Weise in seiner Länge verändert werden kann. Das Ende der Rücklaufleitung 43 ist auf einen Rohransatz 81 aufgesteckt, der mit einem trichterförmig 82 erweiterten Aufsteckrohr 83 verbunden ist. Der Rohransatz 81 mündet rechtwinklig in das Aufsteckrohr 83 ein. Das Aufsteckrohr 83 ist an seinem dem trichterförmigen Ende 82 gegenüberliegenden Ende mit einem ovalen Handgriff 84 versehen. Ferner weist die Schutzkappe 67 an ihrer Unterseite einen nach unten weisenden Ansatz 85 auf, auf den das Aufsteckrohr 83 in der aus Fig. 13 ersichtlichen Weise aufsteckbar ist.

Wenn die Rücklaufleitung 45 aktiviert werden soll, wird das Aufsteckrohr 83 von dem Ansatz 85 abgezogen und auf die Ausströmöffnung 75 der mit der Druckleitung 43 verbundenen Ausströmleitung 56 aufgesteckt. Das Aufsteckrohr 83 befindet sich dann in der in Fig. 13 strichpunktiert gezeigten Stellung. Wenn die Rücklaufleitung 45 wieder deaktiviert werden soll, wird das Aufsteckrohr 83 von der Ausströmöffnung 75 abgezogen und auf den Ansatz 85 aufgesteckt.

In dem Gehäuse 1 ist ein Tragring 86 drehbar gelagert. Im Bereich des unteren Endes des Tragrings 86 ist in dessen äußerem Umfang eine umlaufende Nut 87 vorgesehen, in die ein entsprechender Vorsprung des Gehäuses 1 eingreift. Unterhalb dieses Vorsprungs ist in dem Gehäuses 1 eine Nut 88 vorgesehen, in die das untere, vorspringende Ende des Tragrings 86 eingreift. Um das Einrasten des unteren Endes des Tragrings 86 in das Gehäuse zu ermöglichen, ist am oberen Ende des Gehäuses eine keilförmige bzw. kegelförmige Schrägfläche vorgesehen. Der Tragring 86 ist auf diese Weise mit dem Gehäuse drehbar und axial unverschieblich verbunden. Die Drehachse des Tragrings 86 stimmt mit der Längsachse des Gehäuses 1 überein; der Tragring 86 ist also koaxial zum Gehäuse 1 drehbar.

Die Druckleitung 43 verläuft durch den Tragring 86 hindurch. Genauer gesagt durchsetzt der Ventilstutzen 65 den Tragring 86. Auf diese Weise kann der Ventilstutzen 65 und mit ihm die Druckleitung 43 sowie die Ausströmleitung 56 um die Längsachse des Gehäuses 1 gedreht werden, und zwar um 360°, also in eine beliebige Stellung.

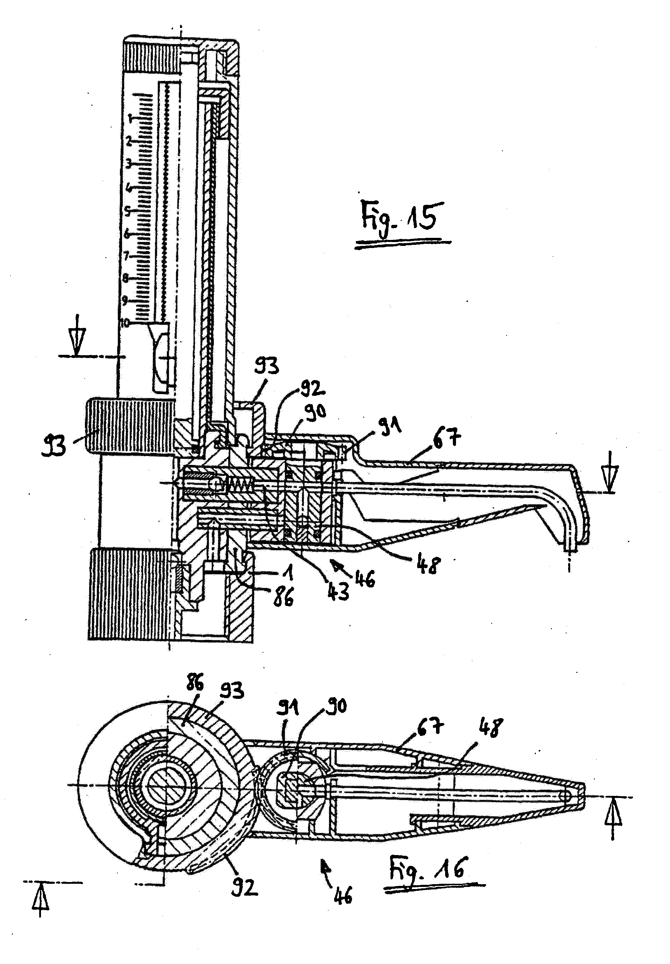

Die Fig. 15 und 16 zeigen eine zweite erfinderische Ausführungsform. Auch bei dieser Ausführungsform ist ein Tragring 86, in dem die Druckleitung 43 verläuft, in dem Gehäuse 1 drehbar gelagert. Ferner ist - wie beim ersten Ausführungsbeispiel - in der Druckleitung ein Ventil 46 vorgesehen. Im Unterschied zu den Fig. 5 und 6 weist das Ventil 46 jedoch keinen Drehknopf 51 auf. Statt dessen ist das einen drehbaren Ventilkörper 48 aufweisende Ventil 46 an seinem oberen Ende mit einem Zahnrad 90 drehfest verbunden, das an seinem Außenumfang mit einer Außenverzahnung 91 versehen ist. Das Zahnrad 90 wird durch eine Abkröpfung der Schutzkappe 67 abgedeckt. Die Außenverzahnung 91 greift in eine Verzahnung 92 ein, die an der äußeren Mantelfläche eines Betätigungsrings 93 vorgesehen ist und die sich in der aus Fig. 16 ersichtlichen Weise über einen Winkelbereich von etwa 90° erstreckt. Der Betätigungsring 93 ist in einer Nut des Tragrings 86 drehbar und axial unverschieblich gelagert. Ferner ist der Betätigungsring an seiner Außenfläche geriffelt. Durch eine Drehung des Betätigungsrings 93 wird über die Verzahnung 92, die Außenverzahnung 91 und das Zahnrand 90 der drehbare Ventilkörper 48 des Ventils 46 gedreht.

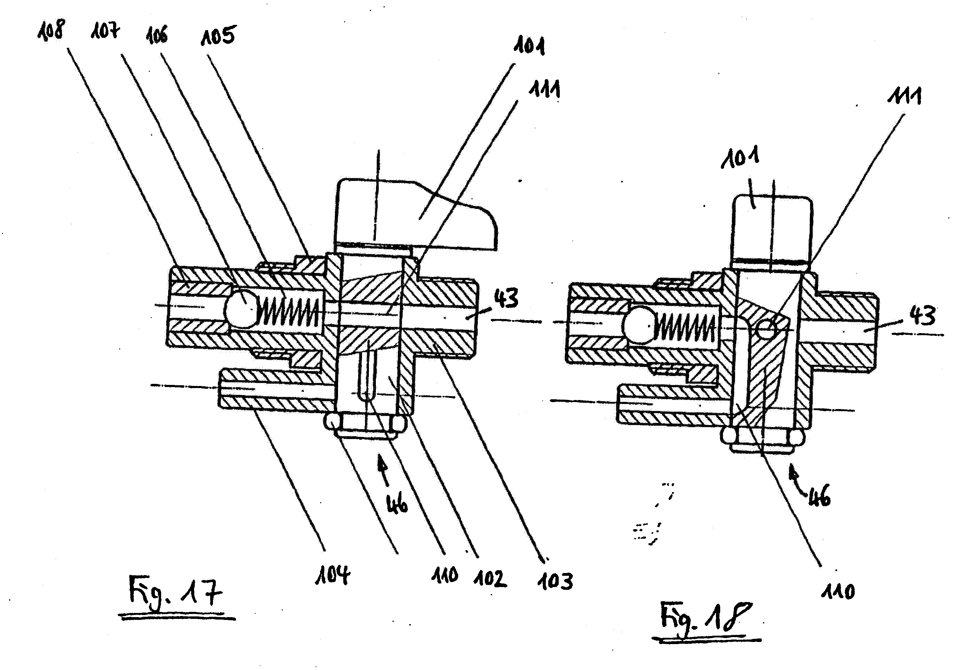

In den Fig. 17 und 18 ist eine Abwandlung des Ventils 46 gezeigt. Dieses Ventil ist nicht Teil der Erfindung. In dem Ventilgehäuse 103 ist sowohl das aus einer Druckventilfeder 106, einer Druckventilkugel 107 und einer Druckventilbuchse 108 bestehende Druckventil als auch das Ventil 46 untergebracht. Das Ventil 46 weist einen drehbaren Ventilkörper (Hahnstopfen) 102 mit einer Durchgangsbohrung 111 und einem Rückströmkanal 110 auf. Mit dem drehbaren Ventilkörper 102 ist ein Drehknopf (Griffstück) 101 verbunden.

In der Fig. 17 befindet sich der drehbare Ventilkörper 102 in der die Druckleitung öffnenden Stellung. Die Durchgangsbohrung fluchtet mit der Bohrung des Druckventils und der Druckleitung 43. Wenn der drehbare Ventilkörper um 90° in die in Fig. 18 gezeigte Stellung verdreht wird, befindet sich die Durchgangsbohrung 111 außer Eingriff. Sie steht jetzt senkrecht zur Längsachse des Ventilgehäuses 103. Die Bohrung des Druckventils ist dann mit dem oberen Ende des Rückströmkanals 110 verbunden. Das untere Ende des Rückströmkanals 110 ist mit dem Rückströmstutzen 104 verbunden. Der Rückströmkanal 110 befindet sich an der äußeren Mantelfläche des drehbaren Ventilkörpers 102. Er verläuft längs einer Mantellinie.

Koaxial zum Druckventil ist eine Gewindemuffe 105 mit dem Ventilgehäuse 103 verbunden.

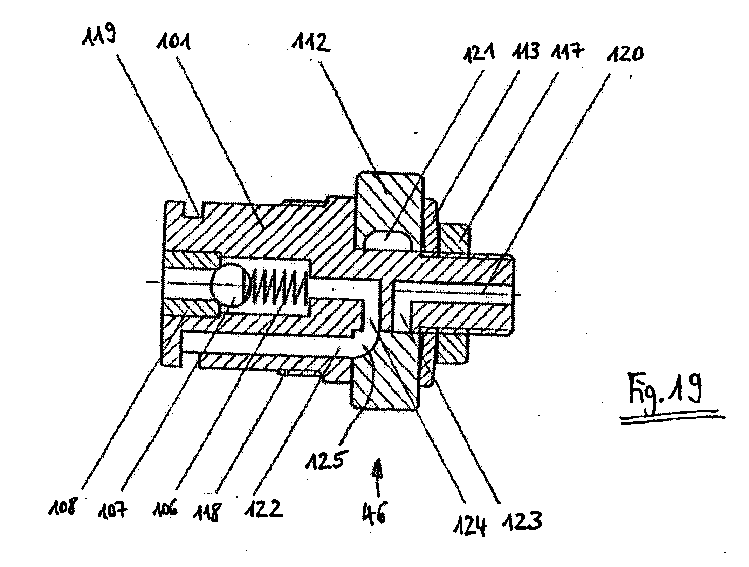

In der Fig. 19 ist eine weitere Abwandlung des Ventils gezeigt. Dieses Ventil ist nicht Teil der Erfindung. Diejenigen Teile, die mit dem in den Fig. 17 und 18 gezeigten Ventil übereinstimmen, sind mit denselben Bezugszeichen versehen. Auch bei dem Ventil nach Fig. 19 ist in dem Ventilgehäuse 101 sowohl das Druckventil als auch das Ventil angeordnet.

Von der Bohrung des Druckventils zweigt eine Querbohrung 124 rechtwinklig nach unten ab. Mit der Bohrung des Druckventils fluchtet eine die Druckleitung bildende Ausstoßbohrung 120. Auch von dieser Ausstoßbohrung 120 zweigt eine Querbohrung 123 rechtwinkelig nach unten ab.

Das Ventilgehäuse 101 besteht aus einem in der Zeichnung links dargestellten, im Durchmesser größeren Teil und einem daran anschließenden, in der Zeichnung rechts dargestellten, im Durchmesser kleineren Teil. An dem Absatz, der zwischen diesen beiden Teilen des Ventilgehäuses 101 gebildet wird, liegt ein Stellring 112 an, der um den im Durchmesser kleineren Teil des Ventilgehäuses 101 drehbar gelagert ist. An dem im Durchmesser kleineren Teil des Ventilgehäuses 101 ist ein Außengewinde vorgesehen, auf das eine Sicherungsmutter 117 aufgeschraubt ist, die eine Tellerfeder 113 gegen den Stellring 112 drückt. Durch die Sicherungsmutter 117 kann der Stellring festgeklemmt werden. Ferner kann dadurch die Kraft, mit der der Stellring 112 bewegt werden muß, justiert werden.

In der Innenfläche (Bohrung) des Stellrings 112 ist ein Überströmkanal 121 vorgesehen. Ferner ist in der Innenfläche des Stellrings 112 ein Rückströmkanal 125 vorgesehen, der gegenüber dem Überströmkanal 121 um 180° versetzt ist. In der in Fig. 19 gezeigten Stellung befindet sich der Rückströmkanal 125 in Eingriff. Er stellt die Verbindung zwischen der Querbohrung 124 und der Rückströmbohrung 122 her.

Wenn der Stellring 112 um 180° gedreht wird, gelangt der Überströmkanal 121 in Eingriff, der dann eine Verbindung zwischen der Querbohrung 124 und der Querbohrung 123 und damit zwischen dem Druckventil und der Druckleitung 120 herstellt.

An dem im Durchmesser größeren Teil des Ventilgehäuses 101 ist ein Einschraubgewinde 118 vorgesehen, ferner eine Ringnut 119.

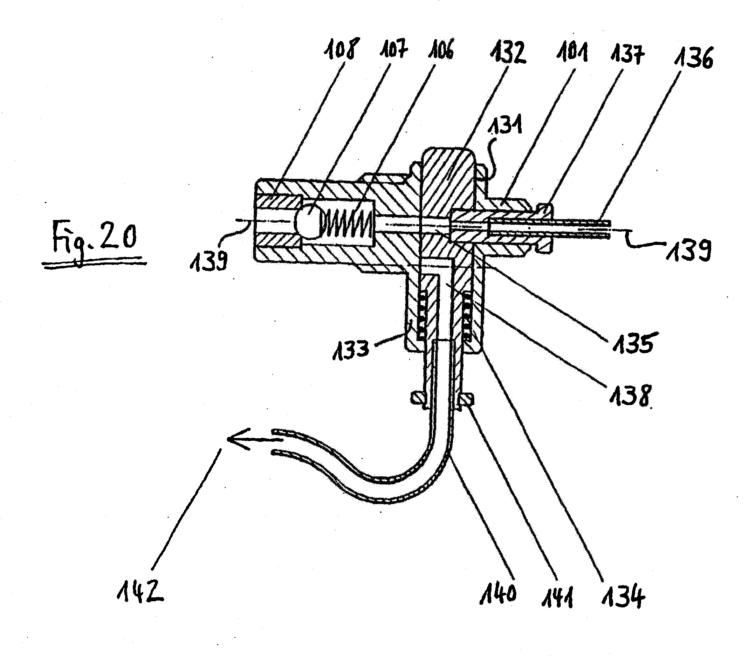

Die Fig. 20 zeigt eine weitere Ausführungsform eines Ventils. Dieses Ventil ist nicht Teil der Erfindung. In dem Ventilgehäuse 101 ist eine Bohrung 131 vorgesehen, die senkrecht zur Ventil-Längsachse 139 verläuft und in der ein Druckknopf 132 längsverschieblich gelagert ist. Die Bohrung 131 durchsetzt das Ventilgehäuse 101 sowie einen das Ventilgehäuse 101 nach unten verlängernden Ansatz 133, der an seinem unteren Ende einen nach innen weisenden Absatz aufweist, an dem sich eine Druckfeder 134 abstützt, deren anderes Ende an einem an dem Druckknopf 132 vorgesehenen Absatz angreift. In dem Druckknopf 132 ist eine Durchgangsbohrung 135 vorgesehen, die mit der Bohrung des Druckventils fluchtet, wenn sich das Ventil in der in Fig. 20 gezeigten, die Druckleitung 136 öffnenden Stellung befindet. Die Durchgangsbohrung 135 besitzt einen im Durchmesser kleineren Teil, der dem Druckventil zugewandt ist, und einen im Durchmesser größeren Teil, der auf der gegenüberliegenden Seite liegt und der Druckleitung 136 zugewandt ist. Zwischen dem im Durchmesser kleineren Teil und dem im Durchmesser größeren Teil der Durchgangsbohrung 135 wird ein Absatz gebildet. Ein Arretierstück 137 ist in eine entsprechende Bohrung des Ventilgehäuses 101 und in den im Durchmesser größeren Teil der Durchgangsbohrung 135 eingesteckt, und zwar bis zu diesem Anschlag in der Durchgangsbohrung 135. In das Arretierstück 137 ist die Druckleitung 136 eingesteckt.

Ferner-ist in dem Druckknopf 132 ein Rückströmkanal 138 vorgesehen, der sich zwischen der Durchgangsbohrung 135 und dem die Druckfeder 134 abstützenden Absatz des Druckknopfes 132 befindet. Der Rückströmkanal 138 besitzt einen oberen Abschnitt, der parallel zur Ventil-Längsachse 139 verläuft und der auf der dem Druckventil zugewandten Seite eine Öffnung besitzt, sowie einen von diesem oberen Abschnitt senkrecht nach unten weisenden, weiteren Abschnitt, der über einen Absatz in einen im Durchmesser größeren Teil übergeht, in den eine flexible Rückströmleitung 140 bis zum Anschlag eingesteckt ist.

Wenn das Ventil aus der in Fig. 20 gezeigten, die Druckleitung 136 öffnenden Stellung in die Rückströmstellung gebracht werden soll, wird das Arretierstück 137 aus dem Ventilgehäuse 101 herausgezogen. Die Druckfeder 134 bewegt dann den jetzt nicht mehr durch das Arretierstück 137 arretierten Druckknopf 132 nach oben, bis der im Bereich des unteren Endes des Druckknopfes 132 vorgesehene, durch eine Ringnut befestigte Sicherungsring 141 mit seiner oberen Fläche an die untere Endfläche des Ansatzes 133 anschlägt bzw. an dieser Fläche anliegt. Der Sicherungsring 141 ist derart angeordnet, daß in dieser Stellung der obere Abschnitt des Rückströmkanals 138 mit der Bohrung des Druckventils, also mit der Ventil-Längsachse 139, fluchtet. Die das Druckventil verlassende Flüssigkeit wird damit durch den Rückströmkanal 138 hindurch in die Rückströmleitung 140 geleitet und von dort in Richtung des Pfeils 142 zurück in den Behälter. Gleichzeitig wird die Durchgangsbohrung 135 für die Druckleitung 136 unterbrochen bzw. geschlossen.

Um die Druckleitung 136 zu öffnen, wird der Druckknopf 132 gegen die Kraft der Druckfeder 134 nach unten gedrückt, beispielsweise durch eine an der oberen Endfläche des Druckknopfes 132 angreifende Kraft. Wenn die Durchgangsbohrung 135 mit der Bohrung des Druckventils, also mit der Ventil-Längsachse 139 fluchtet, kann das Arretierstück 137 eingeschoben und der Druckknopf 132 arretiert werden. In dieser in der Fig. 20 gezeigten Stellung ist der Rückströmkanal 138 geschlossen.

Der besondere Vorteil der Ausführungsform nach Fig. 20 besteht darin, daß das Ventil automatisch geschlossen wird, wenn die Druckleitung 136 und das mit ihr verbundene Arretierstück 137 abgezogen werden. Dann bewegt sich der Druckknopf 132 durch die Druckfeder 134 automatisch in die Rücklaufstellung. Eine versehentliche Abgabe von Flüssigkeit ist ausgeschlossen.

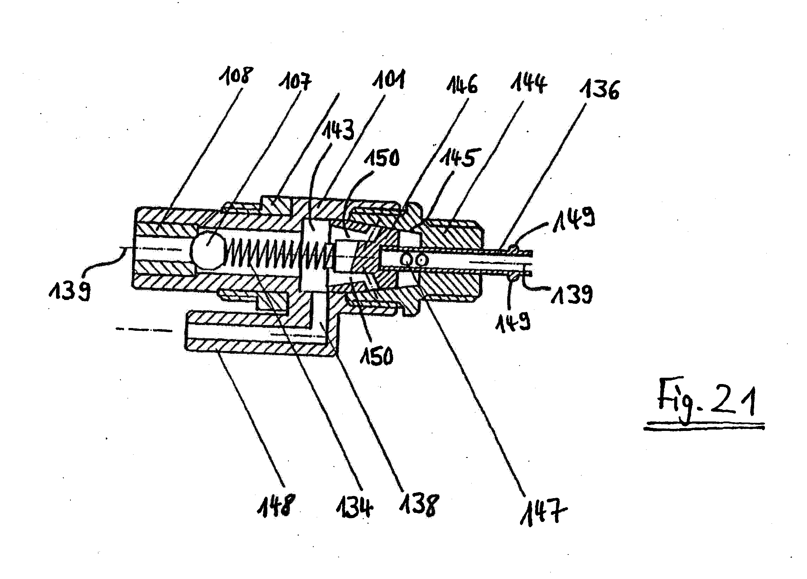

Die Fig. 21 zeigt eine weitere Ausführungsform des Ventils. Dieses Ventil ist nicht Teil der Erfindung. An die Bohrung des Druckventils schließt sich über einen Absatz eine im Durchmesser größere Bohrung an, die eine Ventilkammer 143 bildet. Am äußeren Ende der Ventilkammer 143 ist ein Gewinde vorgesehen, in das ein Einschraubstutzen 144 eingeschraubt ist, der an seinem äußeren Ende eine mit der Ventil-Längsachse 139 fluchtende Durchgangsbohrung aufweist, in die die Druckleitung 136 eingesetzt ist.

In dem Einschraubstutzen 144 ist eine sich zur Ventilkammer 143 kegelförmig erweiternde Bohrung 145 vorgesehen. Ferner ist in der Ventilkammer ein Kolben 146 längsverschieblich gelagert. Die Mittenachse des Kolbens 146 fluchtet mit der Ventil-Längsachse 139. Der Kolben 146 besitzt auf seiner dem Druckventil zugewandten Seite eine äußere Zylinderfläche, die in der Bohrung der Ventilkammer 143 gleitend gelagert ist, sowie eine daran anschließende, vom Druckventil abgewandte Kegelfläche, deren Kegelwinkel mit demjenigen der kegelförmigen Bohrung 145 im Einschraubstutzen 144 übereinstimmt.

Ferner besitzt der Kolben 146 auf seiner dem Druckventil abgewandten Seite eine zentrale, mit der Ventil-Längsachse fluchtende Bohrung, in die das Ende der Druckleitung 136 eingesteckt ist. Die Druckleitung 136 besitzt außerhalb des Bereichs, in dem sie in den Kolben 146 eingesteckt ist, eine Eintrittsbohrung 147. Ferner sind in dem Kolben 146 Druckkanäle 150 vorgesehen, die von der Ventilkammer 143 zur kegelförmigen Bohrung 145 in dem Einschraubstutzen 144 führen. Diese Druckkanäle 150 besitzen jeweils eine Öffnung in der dem Druckventil zugewandten Stirnfläche des Kolbens 146 und eine Öffnung in der äußeren Kegelfläche des Kolbens 146.

In der in der Fig. 21 gezeigten Stellung strömt die Flüssigkeit vom Druckventil in die Ventilkammer 143 und von dort über den Rückströmkanal 138 zurück in den Behälter. Der Rückströmkanal 138 ist in einem mit dem Ventilgehäuse 101 einstückig verbundenen Rückströmstutzen 148 vorgesehen.

Wenn das Ventil in die Druckstellung gebracht werden soll, wird die Druckleitung 136 nach innen, in der Fig. 21 also nach links, bewegt, bis die dem Druckventil zugewandte Stirnfläche des Kolbens 146 an dem Absatz zwischen der Bohrung des Druckventils und der Ventilkammer 143 anschlägt bzw. anliegt oder doch zumindest so weit, bis der Rückströmkanal 138 abgedichtet ist. Dies erfolgt gegen den Druck der Druckfeder 134, die gleichzeitig die Druckfeder des Druckventils ist und den Kolben 146 beaufschlagt. Die Druckfeder 134 stützt sich zum einen an der Ventilkugel 107 des Druckventils ab, zum anderen an einem zentralen Vorsprung des Kolbens 146, der dem Druckventil zugewandt ist und der mit der Ventil-Längsachse 139 fluchtet. In dieser Stellung dichtet der Kolben 146 bzw. dessen äußere Zylinderfläche den Rückströmkanal 138 ab. Gleichzeitig wird ein Abstand zwischen den hinteren, dem Druckventil abgewandten, in der äußeren Kegelfläche des Kolbens 146 liegenden Öffnungen der Druckkanäle 150 in dem Kolben 146 und der inneren Kegelfläche der Bohrung 145 in dem Einschraubstutzen 144 gebildet, so daß die Flüssigkeit durch die Druckkanäle 150 in die Bohrung 145 einströmen kann, von wo diese Flüssigkeit durch die Eintrittsbohrung 147 in die Druckleitung 136 strömen kann. Die Druckleitung 136 kann in einer in der Zeichnung nicht dargestellten Weise in der erwähnten, gegenüber der in Fig. 21 gezeigten Stellung nach links verschobenen Stellung arretiert werden, beispielsweise durch eine Überwurfmutter, die auf das äußere, in der Fig. 21 rechts gezeigte Außengewinde des Einschraubstutzens 144 geschraubt werden kann und die nach innen weisende Ansätze aufweisen kann, die die an der Außenfläche des Rückströmkanals 138 vorgesehenen Ansätze 149 übergreifen und mitnehmen.

Wenn man die Druckleitung 136 wieder losläßt bzw. die Arretierung der Druckleitung 136 löst, wird der Kolben 146 durch die Kraft der Druckfeder 134 in die in Fig. 21 gezeigte Stellung bewegt, in der die Druckleitung 136 geschlossen und die Rückströmleitung 138 geöffnet ist. Auch bei der Ausführungsform nach Fig. 21 wird damit eine unbeabsichtigte Abgabe von Flüssigkeit nach einem Abziehen der Druckleitung 136 verhindert. Ferner ist es nicht erforderlich, einen Ventilkörper für verschiedene Arbeitsschritte umzuschalten. Zunächst wird keine Druckleitung 136 eingesetzt. Das Ventil arbeitet dann automatisch in der Rücklaufstellung. Sobald das Ventil betriebsbereit ist, wird die Druckleitung 136 eingesteckt und arretiert. Das Ventil arbeitet dann in der Druckstellung bzw. Abgabestellung.

## Patentansprüche

1. Flaschendispenser zum Ansaugen und Abgeben von Flüssigkeit aus einem Behälter, bestehend aus
einem Gehäuse (1) mit einem Zylinder (4)
und einem Kolben (10), der in dem Zylinder (4) längsverschieblich geführt ist,
wobei der Hub des Kolbens (10) im Zylinder mittels eines mit einem Gegunanschlag (6) zusammenwirkenden, längsverschieblich und arretierbar geführten Anschlags (16) verstellbar begrenzt ist und
wobei in dem Gehäuse (1) eine vom Behälter zum Zylinder (4) führende Ansaugleitung (41) mit einem Ansaugventil (42) und eine vom Zylinder (4) aus dem Gehäuse (1) herausführende Druckleitung (43) mit einem Druckventil (44) vorgesehen ist,
**dadurch gekennzeichnet,**
**daß** in dem Gehäuse (1) ein Tragring (86) drehbar gelagert ist, in dem die Druckleitung (43) verläuft und
**daß** im Bereich des unteren Endes des Tragrings (86) in dessen äußerem Umfang eine umlaufende Nut (87) vorgesehen ist, in die ein entsprechender Vorsprung des Gehäuses (1) eingreift.

2. Flaschendispenser nach Anspruch 1, **gekennzeichnet durch** eine von der Druckleitung (43) abzweigende Rücklaufleitung (45), **durch** die angesaugte Flüssigkeit in den Behälter zurück abgegeben werden kann.

3. Flaschendispenser nach Anspruch 2, **dadurch gekennzeichnet, daß** die Rücklaufleitung (45) stromabwärts vom Druckventil (44) abzweigt.

4. Flaschendispenser nach Anspruch 2 oder 3, **dadurch gekennzeichnet, daß** die Rücklaufleitung (45) mit der Druckleitung (43) lösbar verbindbar ist.

5. Flaschendispenser nach Anspruch 2 oder 3, **dadurch gekennzeichnet, daß** die Rücklaufleitung (45) durch ein Ventil (46) aufsteuerbar und verschließbar ist.

6. Flaschendispenser nach Anspruch 5, **dadurch gekennzeichnet, daß** das Ventil (46) in eine erste Stellung bringbar ist, in der die Druckleitung (43) geöffnet und die Rücklaufleitung (45) geschlossen ist, und in eine zweite Stellung bringbar ist, in der die Druckleitung (43) geschlossen und die Rücklaufleitung (45) geöffnet ist.

7. Flaschendispenser nach Anspruch 5 oder 6, **dadurch gekennzeichnet, daß** das Ventil (46) aus einem drehbaren Ventilkörper (48) mit einem die Druckleitung (43) öffnenden Druckkanal (55) und einem die Rücklaufleitung (45) öffnenden Rücklaufkanal (56, 58, 59) besteht.

8. Flaschendispenser nach einem der Ansprüche 5 bis 7, **dadurch gekennzeichnet, daß** das Ventil (46) einen längsverschieblichen, vorzugsweise federbelasteten (134) Ventilkörper (132, 146) aufweist.

9. Flaschendispenser nach einem der Ansprüche 5 - 8, **dadurch gekennzeichnet, daß** das Ventil (46) in eine erste Stellung bringbar ist, in der die Druckleitung (43) geöffnet ist, und das in eine zweite Stellung bringbar ist, in der die Druckleitung (43) geschlossen ist.

10. Flaschendispenser nach Anspruch 9, **dadurch gekennzeichnet, daß** das Ventil (46) in seiner zweiten, die Druckleitung (43) schließenden Stellung den Kolben (10) verriegelt.

11. Flaschendispenser nach Anspruch 9 oder 10, **dadurch gekennzeichnet, daß** das Ventil (46) aus einem drehbaren Ventilkörper (48) besteht.

12. Flaschendispenser nach Anspruch 11, **dadurch gekennzeichnet, daß** der drehbare Ventilkörper (48) mit einer Außenverzahnung (91) versehen ist, die in eine an einem Betätigungsring (93) vorgesehene Verzahnung (92) eingreift.

13. Flaschendispenser nach Anspruch 12, **dadurch gekennzeichnet, daß** der Betätigungsring (93) an dem mit dem Gehäuse (1) verbundenen Tragring (86) drehbar gelagert ist.

14. Flaschendispenser nach einem der Ansprüche 9 bis 13, **dadurch gekennzeichnet, daß** das Ventil einen längsverschieblichen, vorzugsweise federbelasteten (134) Ventilkörper (132, 146) aufweist.

15. Flaschendispenser nach einem der Ansprüche 5 - 14, **gekennzeichnet durch** eine sich an die Druckleitung (43) anschließende Ausströmleitung (56) mit einer Ausströmöffnung (75) und eine die Ausströmleitung (56) umgebende Schutzkappe (67), die in eine erste Stellung bringbar ist, in der sie die Ausströmöffnung (75) freigibt, und die in eine zweite Stellung bringbar ist, in der sie die Ausströmöffnung (75) überdeckt.

16. Flaschendispenser nach Anspruch 15, **dadurch gekennzeichnet, daß** die Schutzkappe (67) bei geöffnetem Ventil (46) in ihrer ersten Stellung und bei geschlossenem Ventil (46) in ihrer zweiten Stellung ist.

17. Flaschendispenser nach Anspruch 15 oder 16, **dadurch gekennzeichnet, daß** die Schutzkappe (67) um eine Achse (69) drehbar ist.

18. Flaschendispenser nach Anspruch 17, **dadurch gekennzeichnet, daß** die Schutzkappen-Drehachse (69) quer zur Zylinder-Längsachse (17) verläuft.

## Claims

1. Bottle dispenser for taking in and discharging liquid from a container, comprising:
a housing (1) with a cylinder (4)
and a piston (10) which is guided in a longitudinally displaceable manner in the cylinder (4),
wherein the stroke of the piston (10) in the cylinder is adjustably limited by a stop (16) which is guided in a longitudinally displaceable and fixable manner and is cooperating with a counter stop (6), and
wherein in the housing (1) there is provided an intake line (41) with an intake valve (42) which line leads from the container to the cylinder (4), and a delivery line (43) with a delivery valve (44), which line leads from the cylinder (4) out of the housing (1),
**characterized in that**
a carrying ring (86), in which the delivery line (43) runs, is mounted rotatably in the housing (1) and
a circumferential groove (87) is provided in the outer circumference of the carrying ring (86) in its lower end region, with a corresponding projection of the housing (1) in engagement therewith.

2. Bottle dispenser according to claim 1, **characterized by** a return line (45) which branches off from the delivery line (43) and through which liquid taken in can be discharged back into the container.

3. Bottle dispenser according to Claim 2, **characterized in that** the return line (45) branches off downstream of the delivery valve (44).

4. Bottle dispenser according to Claim 2 or 3, **characterized in that** the return line (45) can be connected releasably to the delivery line (43).

5. Bottle dispenser according to Claim 2 or 3, **characterized in that** the return line (45) can be opened and closed by a valve (46).

6. Bottle dispenser according to Claim 5, **characterized in that** the valve (46) can be moved into a first position, in which the delivery line (43) is open and the return line (45) is closed, and can be moved into a second position, in which the delivery line (43) is closed and the return line (45) is open.

7. Bottle dispenser according to Claim 5 or 6, **characterized in that** the valve (46) comprises a rotatable valve body (48) with a delivery channel (55), which opens the delivery line (43), and a return channel (56, 58, 59), which opens the return line (45).

8. Bottle dispenser according to one of Claims 5 to 7, **characterized in that** the valve (46) has a longitudinally displaceable, preferably spring-loaded (134) valve body (132, 146).

9. Bottle dispenser according to one of Claims 5-8, **characterized in that** the valve (46) can be moved into a first position, in which the delivery line (43) is open, and can be moved into a second position, in which the delivery line (43) is closed.

10. Bottle dispenser according to Claim 9, **characterized in that** in its second position, in which it closes the delivery line (43), the valve (46) locks the piston (10).

11. Bottle dispenser according to Claim 9 or 10, **characterized in that** the valve (46) comprises a rotatable valve body (48).

12. Bottle dispenser according to Claim 11, **characterized in that** the rotatable valve body (48) is provided with an outer toothing formation (91), which engages in a toothing formation (92) provided on an actuating ring (93).

13. Bottle dispenser according to Claim 12, **characterized in that** the actuating ring (93) is mounted rotatably on the carrying ring (86), which is connected to the housing (1).

14. Bottle dispenser according to one of Claims 9 to 13, **characterized in that** the valve has a longitudinally displaceable, preferably spring-loaded (134) valve body (132, 146).

15. Bottle dispenser according to one of Claims 5-14, **characterized by** an outflow line (56) which adjoins the delivery line (43) and has an outflow opening (75) and a protective cap (67), which encloses the outflow line (56) and can be moved into a first position, in which it releases the outflow opening (75), and into a second position, in which it covers over the outflow opening (75).

16. Bottle dispenser according to Claim 15, **characterized in that** the protective cap (67) is in its first position when the valve (46) is open and in its second position when the valve (46) is closed.

17. Bottle dispenser according to Claim 15 or 16, **characterized in that** the protective cap (67) can rotate about an axis (69).

18. Bottle dispenser according to Claim 17, **characterized in that** the axis of rotation (69) of the protective cap runs transversely to the longitudinal axis (17) of the cylinder.

## Revendications

1. Dispensateur de bouteilles pour l'aspiration et la distribution de liquide à partir d'un récipient, comprenant
un boîtier (1) avec un cylindre (4)
et un piston (10) qui est guidé dans le cylindre (4) de façon à pouvoir se déplacer dans le sens longitudinal,
la levée du piston (10) dans le cylindre étant limitée de façon réglable au moyen d'une butée (16) guidée de façon à pouvoir être déplacée en longueur et arrêtée, coopérant avec une contre-butée (6) et
dans le boîtier (1) étant prévue une conduite d'admission (41) conduisant du récipient vers le cylindre (4), avec une soupape d'admission (42) et une conduite de pression (43) sortant du boîtier (1) à partir du cylindre (4), avec une soupape de pression (44)
**caractérisé en ce que**
dans le boîtier (1) est montée de façon pivotante une bague support (86), dans laquelle s'étend la conduite de pression (43) et
**en ce que** dans la zone de l'extrémité intérieure de la bague support (86), dans la circonférence extérieure de cette dernière est prévue une rainure périphérique (87) qui s'engage dans une saillie correspondante du boîtier (1).

2. Dispensateur de bouteilles selon la revendication 1, **caractérisé par** une conduite de retour (45) déviant de la conduite de pression (43), par laquelle du liquide aspiré peut être ramené dans le récipient.

3. Dispensateur de bouteilles selon la revendication 2, **caractérisé en ce que** la conduite de retour (45) dévie de la soupape de pression (44) en aval.

4. Dispensateur de bouteilles selon la revendication 2 ou 3, **caractérisé en ce que** la conduite de retour (45) peut être reliée de façon amovible à la conduite de pression (43).

5. Dispensateur de bouteilles selon la revendication 2 ou 3, **caractérisé en ce que** la conduite de retour (45) peut être ouverte et fermée par une soupape (46).

6. Dispensateur de bouteilles selon la revendication 5, **caractérisé en ce que** la soupape (46) peut être amenée dans une première position, dans laquelle la conduite de pression (43) est ouverte et la conduite de retour (45) est fermée, et dans une deuxième position, dans laquelle la conduite de pression (43) est fermée et la conduite de retour (45) est ouverte.

7. Dispensateur de bouteilles selon la revendication 5 ou 6, **caractérisé en ce que** la soupape (46) comprend un corps de soupape (48) rotatif avec un canal de pression (55) ouvrant la conduite de pression (43) et un canal de retour (56, 58, 59) ouvrant la conduite de retour (45).

8. Dispensateur de bouteilles selon l'une quelconque des revendications 5 à 7, **caractérisé en ce que** la soupape (46) comprend un corps de soupape (132,146) déplaçable dans le sens longitudinal et de préférence sollicité par ressort (134).

9. Dispensateur de bouteilles selon l'une quelconque des revendications 5 à 8, **caractérisé en ce que** la soupape (46) peut être amenée dans une première position, dans laquelle la conduite de pression (43) est ouverte, et qui peut être amenée dans une deuxième position, dans laquelle la conduite de pression (43) est fermée.

10. Dispensateur de bouteilles selon la revendication 9, **caractérisé en ce que** la soupape (46) verrouille le piston (10) dans sa deuxième position fermant la conduite de pression (43).

11. Dispensateur de bouteilles selon la revendication 9 ou 10, **caractérisé en ce que** la soupape (46) comprend un corps de soupape (48) pivotant.

12. Dispensateur de bouteilles selon la revendication 11, **caractérisé en ce que** le corps de soupape (48) pivotant est pourvu d'une denture extérieure (91), qui s'engage dans une denture (92) prévue sur une bague de commande (93).

13. Dispensateur de bouteilles selon la revendication 12, **caractérisé en ce que** la bague de commande (93) est montée de façon pivotante sur la bague support (86) reliée au boîtier (1).

14. Dispensateur de bouteilles selon l'une quelconque des revendications 9 à 13, **caractérisé en ce que** la soupape présente un corps de soupape (132,146) pouvant se déplacer dans le sens longitudinal et de préférence sollicité par ressort (134).

15. Dispensateur de bouteilles selon l'une quelconque des revendications 5 à 14, **caractérisé par** une conduite d'évacuation (56) faisant suite à la conduite de pression (43) avec une ouverture d'évacuation (75) et un capot protecteur (67) entourant la conduite d'évacuation (56), qui peut être amenée dans une première position, dans laquelle elle libère l'orifice d'évacuation (75), et qui peut être amenée dans une deuxième position, dans laquelle elle recouvre l'orifice d'évacuation (75).

16. Dispensateur de bouteilles selon la revendication 15, **caractérisé en ce que** le capot protecteur (67) est dans sa première position avec la soupape (46) ouverte et dans sa deuxième position avec la soupape (46) fermée.

17. Dispensateur de bouteilles selon la revendication 15 ou 16, **caractérisé en ce que** le capot protecteur (67) peut tourner autour d'un axe (69).

18. Dispensateur de bouteilles selon la revendication 17, **caractérisé en ce que** l'axe de rotation du capot protecteur (69) est disposé transversalement à l'axe longitudinal du cylindre (17).
